Europäisches Patentamt

European Patent Office

Office européen des brevets

(19)

(11) EP 0 749 199 A1

(12) EUROPEAN PATENT APPLICATION

(43) Date of publication:
18.12.1996 Bulletin 1996/51

(51) Int. Cl.⁶: H02M 3/335, H04N 5/63

(21) Application number: 96108602.2

(22) Date of filing: 30.05.1996

(84) Designated Contracting States:
DE GB IT

(30) Priority: 12.06.1995 FR 9506901

(71) Applicant: MOTOROLA SEMICONDUCTEURS S.A.
F-31023 Toulouse Cédex (FR)

(72) Inventors:
• L'Hermite, Francois
  Lasserre, Levignac 31530 (FR)

• Pauk, Ondrej
  Ostrava-Poruba (CZ)

(74) Representative: Spaulding, Sarah Jane et al
Motorola,
European Intellectual Property Operations,
Midpoint,
Alencon Link
Basingstoke, Hampshire RG21 7PL (GB)

(54) **Power supply for an appliance having an operating mode and a stand-by mode**

(57)   A power supply for an electric appliance having an operating mode and a standby mode includes a transformer block (9) for producing a constant power output into two low voltage outputs (Vc and Vcc), an operating power supply circuit (2) coupled to one of the two low voltage outputs (Vcc) to power the appliance during the operating mode, and a receiver circuit (3) coupled to the other low voltage output via an impedance path (14, 15). The receiver circuit (3) includes a switch (17) for switching a very low impedance into a path parallel with the first impedance when it receives a signal indicating that the appliance is to enter the standby mode, so that the voltage at the other low voltage output (Vcc) is reduced, thereby increasing the current drawn by the receiver circuit (3) and thus reducing the power available to the operating power supply circuit (2).

FIG.1

## Description

### Field Of The Invention

This invention relates to a power supply, and especially to a power supply for an electric appliance having a mode of operation using a reduced amount of power.

### Background Of The Invention

As is known, many electric appliances, especially consumer appliances, such as televisions and video recorders, which are plugged into the domestic mains network have a mode of operation, known as the "stand-by" mode, in which a reduced amount of power is drawn from the AC mains. During the stand-by mode, also called a "sleep mode", the electric appliance must consume as little energy as possible. This feature is becoming more and more important as new standards are set which require high energy saving.

At present, when, for example, a TV set is turned on by the remote control handset, in stand-by mode it consumes a power of nearly 5 Watts. Future standards may require power consumption of less than 2 Watts. This entails building a system having the ability to work in two completely different modes: the Normal Mode corresponding to a power level between 20 and 300 Watts, and the Stand-by Mode. To control these two modes, it is known to provide a specific "wake-up" block installed in the chassis of the system. The wake-up block remains active during the Stand-by Mode in order to be able to decide to switch back to the Normal Mode. This wake-up block must be, therefore, permanently supplied with power, even during the Stand-by Mode.

One known way of building the wake-up block involves disconnecting the different loads on the main chassis power supply. The power supply keeps working and provides the necessary power to the wake-up block. A second known way consists in completely disabling the main power supply during the stand-by mode and in supplying the wake-up block by a stand alone separate power supply.

As is known, for safety reasons, in most consumer electric appliances, the apparatus chassis must be isolated from the mains network. Thus, generally the wake-up block is provided in the isolated chassis. Therefore, in the first known solution described above it is easy to disable the various loads since the wake-up block is located on the chassis side. The weakness of this solution is that the losses in the main power supply itself are quite high and may not meet future standards. With the second solution, the problem is that a data communication path must be provided between the chassis side and the mains network side since the wake-up block is on the chassis side and the control circuit of the main power supply is on the mains side, or "live side". Thus, the activation/deactivation data coming from the wake-up block must be transferred from the chassis side to the mains side.

### Brief Summary Of The Invention

The present invention therefore seeks to provide a power supply which overcomes, or at least reduces the above-mentioned problems of the prior art.

Accordingly, the invention provides a power supply for an electric appliance having an operating mode and a standby mode for connection to a mains power network, the power supply comprising a transformer block for connection to the mains power network for producing a constant power output into two separate relatively low voltage outputs, an operating power supply circuit coupled to a first one of the two relatively low voltage outputs of the transformer block for producing an operating voltage to power the appliance during the operating mode, a receiver circuit coupled to the other one of the two relatively low voltage outputs of the transformer block via a first impedance, the receiver circuit operating when the appliance is in both the operating mode and the standby mode for detecting a wireless signal indicating that the appliance should switch between the operating mode and the standby mode, the receiver circuit including a switch for switching a second impedance into a path parallel with the first impedance when it detects a signal indicating that the appliance is to enter the standby mode, the second impedance having a lower value than the first impedance so as to lower the voltage taken from the other one of the two relatively low voltage outputs, thereby increasing the current drawn by the receiver circuit and thus reducing the power available to the operating power supply circuit.

In a preferred embodiment, the operating power supply circuit includes a control switch which disables the rest of the operating power supply circuit if the voltage provided from the first one of the two relatively low voltage outputs falls below a predetermined level. Preferably, the control switch comprises a voltage receiver for detecting the level of the voltage supplied at the first one of the two relatively low voltage outputs and for enabling at least parts of the operating power supply circuit according to the detected level.

Preferably, the second impedance is substantially lower than the first impedance. In some cases, the second impedance could even be a short circuit.

In one embodiment, the receiver circuit and the first and second impedances are galvanically isolated from the transformer block.

2

The transformer block preferably includes a transformer having a primary side for coupling to the mains power network and a secondary side for providing the two relatively low voltage outputs, and a current controller for controlling the current flowing through the primary side of the transformer. The current controller includes a current detector for detecting the current flowing through the primary side of the transformer, means for generating a voltage representative of the detected current, a comparator for comparing the voltage with a reference voltage and means for controlling the current flowing in the primary side of the transformer in dependence on the output of the comparator.

In a further preferred embodiment, the power supply comprises a current controlling circuit including a voltage detecting circuit for detecting the level of the voltage supplied at the first one of the two relatively low voltage outputs and a control circuit for reducing the current flowing through the primary side of the transformer when the detected voltage is below a predetermined level.

Brief Description Of The Drawings

One preferred embodiment of the invention will now be more fully described, by way of example, with reference to the drawings, of which:

FIG. 1 is a schematic diagram of a power supply according to the invention; and
FIG. 2 is a graphical representation of the power supplied in Normal Mode and Stand-by Mode.

Detailed Description

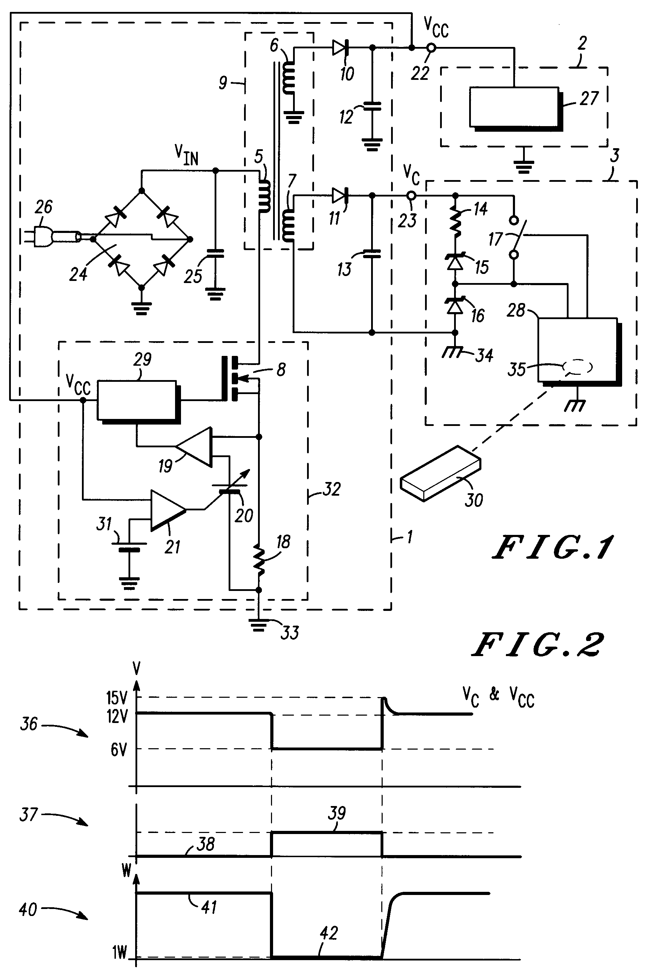

Thus, as shown in FIG. 1, a complete power supply for an electric appliance having a Stand-by Mode control system includes a constant power supply block 1, a main power supply block 2 having a controller 27, and a wake-up block 3 having a wake-up controller block 28 with an infra-red receiver 35 for receiving instructions from an infra-red remote control transmitter 30.

The constant power supply block 1 is connected to a mains network by a plug 26 and provides two supply voltages Vcc and Vc of approximately 12V and nodes 22 and 23, respectively, for supplying blocks 2 and 3. The voltages Vc and Vcc are approximately equal and their respective values are chosen according to the requirements of blocks 2 and 3.

The constant power supply block 1 uses a so-called flyback structure for the conversion of the energy. The flyback structure comprises a transformer block 9 having a primary winding 5 magnetically coupled to, and galvanically isolated from first and second secondary windings 6 and 7. Galvanic isolation means that when a dc voltage is applied between any point of the primary winding 5 and any point of the secondary windings, no current flows. This should be the case even up to a level of the dc voltage of about 4,000V. The input power Vin for the primary winding 5 is taken from the mains network via plug 26 and a diode bridge 24 and bulk capacitor 25.

Operation of the primary winding 5 is controlled by control block 32. This includes a power switch 8, such as power MOSFET MTP2N60E manufactured by Motorola Inc., coupled to the primary winding 5. A sensing resistor 18 is coupled between the power switch 8 and ground reference potential 33, which is not isolated from the mains, and is used to measure the current flowing in the primary winding 5. This current measurement allows the flyback structure to operate in the so-called Current Mode of operation in which the parameter controlling the regulation of the converter is the actual current flowing in the primary winding 5. The voltage developed across the sensing resistor 18 is proportional to the current flowing in the primary winding 5 and is used by the control block 32 to control the conduction state of the power switch 8 between an "ON" state in which the power switch has very little resistance and an "OFF" state in which the power switch has a very high resistance. When the power switch 8 is in the ON state a current flows in the primary winding 5 from the input power source Vin to the ground reference potential 33 via the power switch 8 and the sensing resistor 18. The above described technique using a power switch which can be set in consecutive ON / OFF states is called a "Chopper" technique or a "Switchmode" technique.

The two secondary windings 6 and 7 are anti-coupled with the primary winding 5. This means that, when a current is flowing in the primary winding 5 no current can flow in the secondary windings 6 and 7. This anti-coupling of the secondary windings associated with diodes 10 and 11, coupled to respective secondary windings 6 and 7, allow the currents in secondary windings 6 and 7 to flow when the power switch 8 is in the "OFF" state. The currents flowing in the secondary windings 6 and 7 supply respective capacitors 12 and 13. The voltage developed on capacitor 12 provides voltage Vcc at node 22 and the voltage developed on capacitor 13 provides voltage Vc at node 23. Voltage Vc is given with reference to the "isolated chassis ground" represented by numeral 34.

A comparator 19 receives the voltage developed across sensing resistor 18 and compares it with a reference voltage from a voltage source 20, which reference voltage can have one of two different constant values: a first constant value of the reference voltage which corresponds to the Normal Mode value, and a second, lower constant value which corresponds to the Stand-by Mode value. These values controls the amount of energy which will be reached whenever the power switch 8 is switched to its OFF state. The output of the comparator 19 passes to a fixed frequency control circuit 29 which switches the power switch 8 between its ON and OFF states according to the output of the comparator.

The inductance value of the primary winding part 5 , the switching frequency of the control circuit 29 and the level of the input voltage Vin are the parameters which define the rate of change of the current in the primary winding 5. In the preferred embodiment of the invention, the current flowing in the primary winding 5 will have already reached zero before the power switch 8 is activated to the ON state. This technique is generally called the Discontinuous Current Mode of Operation. As the frequency of the control circuit 29 is fixed, the power delivered by the flyback converter structure is constant.

The total load of the flyback converter is dependent on the two different loads connected respectively to nodes 22 and 23. The values of these two different loads are dependent on the mode of operation, i.e. Normal Mode or Stand-by Mode. Thus, the flyback converter load depends on two different power demand levels.

The power demand level in Normal Mode ($PD_N$) is provided by the sum of two terms:

$$PD_N = Vcc_N . Icc_N + Vc_N . Ic_N$$

where $Vcc_N$ is approximately 12V, $Icc_N$ is the current consumption of the controller 27 of the main power supply block 2 during Normal Mode, $Vc_N$ is approximately 12V and $Ic_N$ is the current consumption of the wake-up block 3 during the Normal Mode of operation.

The power demand level in Stand-by Mode ($PD_S$) is given in a similar manner by the sum of two terms, as follows:

$$PD_S = Vcc_S . Icc_S + Vcc_S . Ic_S$$

where $Vcc_S$ is the voltage supply level of the main power supply block 2 during the Stand-by Mode, $Icc_S$ is the current consumption of the main power supply block 2 during Stand-by Mode, $Vc_S$ is the voltage supply level of the wake-up block 3 during Stand-by Mode and $Ic_S$ is the current consumption of the wake-up block 3 during the Stand-by Mode of operation.

The wake-up block 3 includes a switch 17 which receives control signals from the wake-up controller 28 indicating instructions received by the receiver 35 from the remote control transmitter 30. A pair of Zener diodes 15 and 16 are coupled between the "isolated chassis ground" 34 and node 23 via a resistor 14. While working in Normal Mode, the switch 17 is open. The voltage Vc is determined by the two Zener diodes, whose values are typically 5V plus the voltage developed across the resistor 14. The value of this resistor 14 is chosen so as to establish a reasonable impedance equilibrium between the two loads seen by the nodes 22 and 23 during the Normal Mode of operation.

As an example, in the described embodiment, the voltages and currents typically reached during the Normal Mode are as follows:

The current delivered at node 22 is typically 29mA. The value of voltage Vcc is approximately 12 Volt. The current consumption of the wake-up block 3 is typically 22 mA. The value of voltage Vc is approximately 12Volt. Thus, the total power delivered to the load by the flyback converter is then:

$$(12 V \times 29 mA) + (12 V \times 22 mA) = 348 mW + 264 mW = 612mW .$$

During the Normal Mode of operation, when the receiver 35 in the wake-up controller 28 of wake-up block 3 receives a Stand-by instruction sent by the remote control transmitter 30, the wake-up controller 28 sends a control signal to close switch 17.

The switch 17 thus establishes a low impedance path between the node 23 and the cathode of Zener diode 16. The voltage supplying the wake-up controller 28 remains at typically 5 Volt due to the Zener diode 16 but the current flowing out of node 23 becomes higher, typically reaching about 85 mA. In fact the Zener diode 16 acts as a so-called shunt regulator which means that an extra current is flowing into that Zener diode 16. The new power consumption at node 23 is then increased to about 510 mW (85 mA x 6 V).

As stated above, since the flyback converter delivers constant power during Normal Mode operation, corresponding to the first constant value of reference voltage from the voltage source 20, as a direct consequence the available power at node 22 is therefore reduced. The voltage Vcc drops down to approximately 6V.

The controller 27 of the main power supply block 2 is provided with two different working modes i.e. an Active Mode and a Disable Mode. One example of a suitable controller is the device manufactured by Motorola Inc. and sold under Part No. MC44603. However, many other controllers could be used to perform the main Switched Mode Power Supply control function.

Thus, when the voltage Vcc drops from 12 V down to approximately 6V, two different actions take place. Firstly, a comparator 21 in the control block 32 compares the voltage Vcc with a reference voltage, which is set approximately 6V, from a voltage source 31. When the comparator 21 detects that the voltage Vcc has fallen to approximately the same value as the reference voltage presented by the voltage source 31, the output of the comparator 21 is used to set the voltage source 20 to the second, lower constant value corresponding to a lower current level and hence to a lower power level delivered by the flyback converter. This lower current level corresponds to the power requested to supply the wake-up controller 28, which is about 250 mW plus a small current in the Zener diode 16.

Secondly, the controller part 27 of the main power supply block 2 switches automatically into the Disable Mode and, as a consequence, its current consumption drops from about 29 mA down to about 300 micro Amps which corresponds to a power consumption of less than 3 mW. Thus, in the Stand-by Mode, the total power level delivered by the fly-back converter is approximately 270 mW. However, the total power drawn from the mains network during the Stand-by Mode is slightly higher than 270 mW because the control block 32 requires some power to make the flyback converter operate.

This is clearly shown in FIG. 2, where the top graph 36 shows the levels of the voltages Vc and Vcc varying in time according to whether the switch 17 is open or closed, as shown schematically in the central graph 37, where the open state of the switch 17 is indicated by reference numeral 38 and the closed state of the switch 17 is indicated by reference numeral 39. The lowest graph 40, of FIG. 2 shows the mains power consumption, which is at a normal, full power level 41 when the switch 17 is in the open state 38 with voltages Vc and Vcc at about 12 V, and at a stand-by power level 42 of about 1 Watt when the switch 17 is in the closed state 39 and voltages Vc and Vcc are at about 6 V.

It will be appreciated that the comparators 19 and 21, voltage source 20 and control circuit 29 can be built in many different technologies. Since the voltage Vcc at node 22 is by definition not "mains isolated", the control clock 32 can itself be supplied by the voltage Vcc. This technique is known as "self supply" or "self powering" and gives the advantage of saving energy. In fact, without self supply the energy needed to supply control block 32 would need to be supplied from the input voltage Vin. Since this is a high voltage source of typically 300 Volt, using the European mains network, the total power needed to supply control block 32 would be 300 Volt multiplied by the supply current for control block 32.

When the wake-up controller 28 receives an instruction from the remote control transmitter 30 to switch to Normal Mode, the switch 17 is opened and the current flowing out of the node 23 returns to the previous lower value of about 22 mA. The power delivered at node 23 drops from about 580 mW down to about 250 mW. Since the flyback converter delivers a constant power of about 270 mW, an amount of approximately 20 mW are now available at node 22. Since the required power at node 22 is about 3 mW, the 17 mW of additional power creates an increase in the voltage Vcc.

The current consumption of the controller 27 is nearly independent of the voltage Vcc and therefore the capacitor 12 connected in parallel with the controller 27 receives an additional current. The voltage Vcc thus rises. The hysteresis of the comparator 21 has a rising detection voltage level of about 12 V. When the voltage Vcc reaches 12 V, the voltage source 20 is switched back to the first constant value and consequently the power delivered by the flyback converter is increased up to 570 mW.

As best shown in the first graph 36 of FIG. 2, voltage Vcc rises more rapidly reaching a peak at Vpeak which reaches 15V. When Vcc reaches 15V the controller 27 is "woken up" and causes the main power supply block 2 to start operating. The current consumption of the controller 27 then again reaches 29 mA making the voltage Vcc reduce down to about 12 V and the previous Normal Mode equilibrium occurs. This steady state is maintained until a new Stand-by order is received by the infra-red receiver 35 from the infra-red remote control transmitter 30.

It will be appreciated that although only one particular embodiment of the invention has been described in detail, various modifications and improvements can be made by a person skilled in the art without departing from the scope of the present invention.

For example, the flyback structure described above in the preferred embodiment can be replaced by any other known suitable structure, such as the "cascaded flyback structure " described by the company Unitrode in its application note U-149 or the quasi-resonant structure which is similar to the classical flyback structure. This structure generally differs by the fact that the energy transfer from the primary side to the secondary side uses a resonance technique. This means that the currents and voltages in the structure are governed by the electrical resonance of an inductor and capacitor arrangement. This is similar to the deflection circuit used in some CRT's (cathode ray tubes).

It will further be appreciated that the arrangement of diodes 15 and 16 and resistor 14, whose function is to modify the impedance state presented to node 23, can be replaced by any other suitable structure such as an adjustable shunt regulator made in either bipolar or CMOS technology. Such shunt regulators can be similar to the one used in device number TL431 manufactured by Motorola. If this kind of arrangement is used to modify the level of the voltage Vc at node 23 between the Normal Mode and the Stand-by Mode then the function of switch 17 could be associated with the shunt regulator.

The activation/deactivation sequence of the main power supply could also be implemented in different ways. For example, the Vc voltage level variation could be used not for supplying voltage Vcc to the controller 27, but for activating a dedicated enabling/disabling block. This kind of enabling/disabling function is provided in currently existing devices, such as TDA4605 from Siemens using pin number 7 connected to ground or as MC44603 from Motorola using pin number 11 connected to ground.

The principle of delivering a constant power from the flyback converter using the peak current controller comprising comparator 19 and voltage source 20 together with sensing resistor 18 could also be changed. The power delivered by such flyback controllers using the switchmode technique is the arithmetical product of the energy handled during every switching cycle by the switching frequency. Other techniques using a fixed or variable frequency associated with another means of controlling the energy could alternatively be used.

Thus, in the preferred embodiment, the invention provides a stand-alone low power level power supply for supplying a wake-up block located on the chassis side together with a block or device controlling the main power supply located on the mains network side and also provides a data communication link from the chassis side back to the mains network side for disabling/enabling of the main power supply by providing a complete power supply electrically located on the mains side of the set firstly for supplying the wake-up block with a complete mains/chassis isolation and secondly for directly supplying the control circuit of the main power supply without isolation from the mains.

The power supply is built in such a way that it delivers a constant output power level. The output power is available on two different outputs Vc and Vcc. These two outputs are tightly coupled together in order to get a good power sharing between both. This means that a power variation on one of them directly affects the available amount on the other one. This phenomenon is used to transfer information from one output to the other and particularly in the described application from Vc to Vcc.

The information to be transferred is the "stand-by order" delivered by the wake-up block. The action of that order on the chassis side is to absorb or dissipate an amount of power on the Vc output in addition to the requested power of the wake-up block. This additional amount of power reduces the available power on the Vcc output side. The share of the current drawn from Vc and Vcc is defined in order that during the stand-by mode the voltage on Vc is sufficient to nominally supply the wake-up block and not sufficient to supply the controller circuit of the main power supply. As a direct consequence the main power supply switches OFF while the wake-up block remaining normally supplied is fully active. As soon as the wake-up block receives the "normal mode order" it stops absorbing the additional amount of power and, due to the accurate coupling between Vc and Vcc, the Vcc output receives more power so that the Vcc voltage starts to increase and can reactivate the main power supply.

## Claims

1. A power supply for an electric appliance having an operating mode and a standby mode for connection to a mains power network, the power supply comprising a transformer block for connection to the mains power network for producing a constant power output into two separate relatively low voltage outputs, an operating power supply circuit coupled to a first one of the two relatively low voltage outputs of the transformer block for producing an operating voltage to power the appliance during the operating mode, a receiver circuit coupled to the other one of the two relatively low voltage outputs of the transformer block via a first impedance, the receiver circuit operating when the appliance is in both the operating mode and the standby mode for detecting a wireless signal indicating that the appliance should switch between the operating mode and the standby mode, the receiver circuit including a switch for switching a second impedance into a path parallel with the first impedance when it detects a signal indicating that the appliance is to enter the standby mode, the second impedance having a lower value than the first impedance so as to lower the voltage at the other one of the two relatively low voltage outputs, thereby increasing the current drawn by the receiver circuit and thus reducing the power available to the operating power supply circuit.

2. A power supply according to claim 1, wherein the operating power supply circuit includes a control switch which disables the rest of the operating power supply circuit if the voltage provided from the first one of the two relatively low voltage outputs falls below a predetermined level.

3. A power supply according to claim 2, wherein the control switch comprises a voltage receiver for detecting the level of the voltage supplied at the first one of the two relatively low voltage outputs and for enabling or disabling at least parts of the operating power supply circuit according to the detected level.

4. A power supply according to any preceding claim, wherein the second impedance is substantially lower than the first impedance.

5. A power supply according to claim 4, wherein the second impedance comprises a short circuit.

6. A power supply according to any preceding claim, wherein the receiver circuit and the first and second impedances are galvanically isolated from the transformer block.

7. A power supply according to claim 6, wherein the transformer block includes a transformer having a primary side for coupling to the mains power network and a secondary side for providing the two relatively low voltage outputs, and a current controller for controlling the current flowing through the primary side of the transformer.

8. A power supply according to claim 7, wherein the current controller includes a current detector for detecting the current flowing through the primary side of the transformer, means for generating a voltage representative of the detected current, a comparator for comparing the voltage with a reference voltage and means for controlling the current flowing in the primary side of the transformer in dependence on the output of the comparator.

9. A power supply according to any preceding claim, further comprising a current controlling circuit including a voltage detecting circuit for detecting the level of the voltage supplied at the first one of the two relatively low voltage outputs and a control circuit for reducing the current flowing through the primary side of the transformer when the detected voltage is below a predetermined level.

**FIG.1**

**FIG.2**

**European Patent Office**

**EUROPEAN SEARCH REPORT**

Application Number

EP 96 10 8602

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | NL-A-7 810 087 (PHILIPS NV) 9 April 1980<br>* page 4, line 26 - line 30 *<br>* page 4, line 9 - line 10 *<br>--- | 1,4,6-8 | H02M3/335<br>H04N5/63 |
| A | DE-C-33 28 181 (GRUNDIG) 24 May 1984<br>* abstract; figure 1 *<br>--- | 5 | |
| A | EP-A-0 380 033 (SIEMENS AG) 1 August 1990<br>* abstract; figure 1 *<br>----- | 1,8 | |
| | | | TECHNICAL FIELDS SEARCHED (Int.Cl.6)<br><br>H02M<br>H04N |

The present search report has been drawn up for all claims

| Place of search | Date of completion of the search | Examiner |
|---|---|---|
| THE HAGUE | 28 June 1996 | Van den Doel, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................

& : member of the same patent family, corresponding document

EPO FORM 1503 03.82 (P04C01)